# EUROPÄISCHE PATENTANMELDUNG

(11) **EP 1 098 492 A1**
(43) Veröffentlichungstag der Anmeldung: **09.05.2001**
(21) Anmeldenummer: 99121865.2
(22) Anmeldetag: 04.11.1999
(51) Int. Cl.: H04L 29/06, H04L 29/12

(54) **Kommunikationsschnittstelle mit graphisch orientierten Bereichen**

(71) Anmelder: SIEMENS AKTIENGESELLSCHAFT, 80333 München (DE)
(72) Erfinder: Stein, Karl-Ulrich, 82008 Unterhaching (DE)

(57) **Zusammenfassung**

In der vorliegenden Erfindung wurde eine Kommunikationsschnittstelle wie beispielsweise ein Fernseher, ein Web-Browser oder ein Scanner mit graphisch orientierten Bereichen wie beispielsweise Bilder, Frames, Hyperlinks und/oder Graphiken bereitgestellt, mit dem angezeigte URL's oder e-mail-Adressen direkt von einer Analyseeinrichtung erkannt werden und einer Speichereinrichtung zur Verfügung gestellt werden, so daß diese Adressen direkt für den Benutzer ansteuerbar sind, ohne das er sich die eingeblendete Adresse merken oder aufschreiben müßte.

## Beschreibung

Die vorliegende Erfindung betrifft eine Kommunikations-schnittstelle mit graphisch orientierten Bereichen. Insbesondere betrifft die vorliegende Erfindung eine Kommunikations-schnittstelle, wie einen Fernseher, eine Web-Browser oder einen Scanner mit graphisch orientierten Bereichen, mit dem insbesondere Informationen aus dem Internet abgerufen oder versendet werden können.

Bei einer herkömmlichen Kommunikationsschnittstelle wie z. B. einem Fernseher werden URL (Uniform Ressource Locater)-Adressen oder e-mail-Adressen als Verweis für weitere Informationen eingeblendet. Der Kommunikationsteilnehmer muß sich diese Information nun merken oder aufschreiben, um anschließend über eine weitere Kommunikationsschnittstelle, beispielsweise einen Web-Browser, durch Eingabe über eine Tastatur an die gewünschte Information zu kommen. Dies führt aufgrund des Zeitdruckes zum Notieren dieser Adressen bzw. aufgrund von Fehlern bei der Erfassung zu Fehlinformationen und Informationsverlusten.

Weiterhin wird als nachteilhaft empfunden, daß die Bedienung des Web-Browsers über den Computer mit Tastatur und Maus erfolgen muß. Insbesondere ältere Menschen und Führungskräfte, die nicht an das Arbeiten mit Computer gewöhnt sind, empfinden dies als umständlich. Außerdem wird neben einer ersten Kommunikationsschnittstelle, wie beispielsweise einem Fernseher, eine zweite Kommunikationsschnittstelle, beispielsweise ein Computer benötigt.

Aufgabe der vorliegenden Erfindung ist es daher eine Kommunikationsschnittstelle bereitzustellen, die verlustfreier arbeitet und für größere Kreise von potentiellen Benutzern einsetzbar ist.

Insbesondere wird die Aufgabe gelöst durch eine Kommunikationsschnittstelle mit graphisch orientierten Bereichen, bei der eine Analyseeinrichtung vorgesehen ist zur Analyse der graphisch orientierten Bereiche auf spezielle Zeichenfolgen und eine Speichereinrichtung vorgesehen ist zur Speicherung von zu den Zeichenfolgen korrespondierenden Adressen. Auf diese Weise ist eine Kommunikationsschnittstelle bereitgestellt, bei der die speziellen Zeichenfolgen, wie beispielsweise URL-Adressen oder e-mail-Adressen, direkt analysiert, erkannt und abgespeichert werden können, so daß sie unmittelbar oder später zu einer vorbestimmten Zeit direkt abrufbar sind.

Bei einem bevorzugten Ausführungsbeispiel der vorliegenden Erfindung ist die Kommunikationsschnittstelle ein Fernseher, ein Web-Browser oder ein Scanner. Dadurch können als Kommunikationsschnittstellen herkömmliche Geräte eingesetzt werden. Bevorzugt ist die Kommunikationsschnittstelle ein Computer-terminal.

Weiterhin bevorzugt umfaßt die Analyseeinrichtung einer erfindungsgemäßen Kommunikationsschnittstelle eine OCR (Optical Character Recognition) - Analyseeinrichtung. Damit können die Fernsehbilder direkt auf Text hin analysiert werden und dieser textbasiert zur Verfügung gestellt werden.

Besonders bevorzugt umfassen die graphisch orientierten Bereiche Bilder; Frames, Hyperlinks und/oder Graphiken. Als Bilder kommen beispielsweise Fernsehbilder in Betracht, auf denen entsprechende Zeichenfolgen wie beispielsweise URL's und/oder e-mail-Adressen eingeblendet sind. In einzelnen Frames von Web-Pages können ebenfalls Zeichenfolgen vorkommen, die durch die Analyseeinrichtung erkannt werden. Solche graphisch orientierten Bereiche können auch Hyperlinks sein, die graphisch als Button ausgebildet sind. Daneben können einzelne Graphiken - wie beispielsweise Logos oder Bildbestandteile - Zeichenfolgen oder Links enthalten.

Besonders bevorzugt umfassen die speziellen Zeichenfolgen HTML-Programmbefehle wie beispielsweise auch Navigationsbefehle innerhalb eines Web Browsers, URL's, e-mail-Adressen, Adressen, Telefonnummern und/oder Kartennummern. Dadurch ist es möglich, die auf einem Fernsehbild eingeblendeten URL's über die Analyseeinrichtung textbasiert zu speichern und dann als spezielle Adressen vorzuhalten. Die speziellen Zeichenfolgen können bevorzugt vom Betrachter der Kommunikations-schnittstelle optisch erfaßbar sein oder nicht als Text wahrnehmbar hinter einzelnen graphischen Bereichen ,,versteckt" bzw. hinterlegt sein. So können beispielsweise URL's von Firmen hinter graphisch dargestellten Logos dieser Firma verborgen sein, ohne daß die URL selbst lesbar wäre. Diese URL liegt jedoch im Quelltext des graphisch orientierten Bereichs und kann über die Analyseeinrichtung erfaßt und textorientiert gespeichert werden.

Bevorzugt umfassen die zu den Zeichenfolgen korrespondierenden Adressen alphanumerische Zeichenfolgen, wie beispielsweise kurze prägnante Merkworte, die durch den Benutzer vorbestimmbar sind, Zahlen, besonders bevorzugt zweistellige Zahlen und/oder URL's als textbasierte Adressen und/oder e-mail-Adressen. Diese korrespondierenden Adressen dienen bevorzugt dem Benutzer der Kommunikationsschnittstelle, um die einzelnen Verweise auf weiterführende Informationen leicht und übersichtlich auslesen lassen zu können.

Beim bevorzugten Ausführungsbeispiel der vorliegenden Erfindung werden die korrespondierenden Adressen den graphisch orientierten Bereichen zugeordnet, zu denen sie korrespondieren. Dies kann bevorzugt dadurch erfolgen, daß die entsprechenden korrespondierenden Adressen neben den graphischen Bereichen eingeblendet werden, so daß diese durch einfachen Abruf vom Benutzer der Kommunikationsschnittstelle auswählbar sind. So können bevorzugt den graphisch orientierten Bereichen in einem Web-Browser korrespondierende Adressen als zweistellige Zahlen so zugeordnet werden, daß die entsprechenden Zahlen neben den graphischen Bereichen eingeblendet werden. So können neben den Buttons für die Navigation durch den Browser sowie neben einzelnen Hyperlinks, Eingabefeldern oder e-mail Adressen zweistellige Zahlen stehen, die für den Benutzer der Kommunikationsschnittstelle zu den entsprechenden Funktionen der graphisch orientierten Bereiche korrespondieren.

Bei einer besonders bevorzugten Ausführungsform der vorliegenden Erfindung kann der Benutzer der Kommunikationsschnittstelle nun diese korrespondierenden Adressen über eine Eingabeeinrichtung auswählen, um die dahinterliegende Funktion zu aktivieren.

Besonders bevorzugt handelt es sich bei der Eingabeeinrichtung um eine herkömmliche Fernsehfernbedienung mit dem üblichen alphanumerischen Zahlennummerblock. So ist es möglich, daß mit einer herkömmlichen Fernbedienung die einmal als URL-Adressen erkannten Bereiche auf einem Fernsehbild angesteuert werden und dadurch dem Benutzer durch Eintippen der entsprechenden Zahlenkombination der direkte Zugriff zu den weiterführenden Informationen, beispielsweise über den ebenfalls am Fernsehbildschirm zu betrachtenden Web-Browser, aufgerufen werden kann.

Auf diese Weise ist es auch für computerunkundige Menschen möglich, einen Web-Browser, bevorzugt lediglich mit einer Fernsehfernbedienung, zu bedienen. Diese Funktion können in einem spezifischen Navigator (z.B. für Browser based Communication) fest eingestellt sein oder in einem pull-down Menue bei Optionen oder Ansicht eingestellt werden. Ausgeführt wird die Einblendung der Zahlen durch spezielle Teile in der Software-Architektur des Navigators. Damit kann auch ein Benutzer, der nur an die Zehnertastatur gewöhnt ist, die für ein Surfen im Internet nötigen Browserfunktionen und die aus einer WWW-Seite zu initiierenden Basisfunktion wie z.B. für E-Commerce oder eine Kommunikation bedienen kann. Ein weiterer Vorteil besteht darin, daß dies aus Fernsehdistanz erfolgen kann und keine Arbeitshaltung vor einem Computer eingenommen werden muß.

Besonders bevorzugt werden die für die Navigation angezeigten Zahlen im Schwerpunkt oder in einer Ecke eines anklickbaren Feldes eingeblendet. Um Bedeckungen zu vermeiden ist vorgesehen, daß sie sich bevorzugt auch langsam im Feld bewegen. Bevorzugt wird die Sichtbarkeit der eingeblendeten Zahlen in Größe und Farbe in einer look-up Tabelle festgelegt und/oder adaptiv nach den aus der Page zu entnehmenden geometrischen Datenfelder angewandt. Die Sichtbarkeit der eingeblendeten Zahlen und Vermeidung störender Verdeckungen wird vorteilhafterweise durch ein zeitlich wechselnden Hell-/Dunkelkontrast blinkend oder langsam wechselnd erzielt. Bevorzugt wird nach dem Anklicken durch die Eingabe einer oder mehrerer Zahlen die erfolgreiche Eingabe durch ein Aufleuten oder eine Verfärbung der eingeblendeten Zahlen oder des angeklickten Ikons bzw. des graphisch orientierten Bereichs angezeigt.

Besonders bevorzugt können für einen breiten Teil des Benutzerkreises eingerichtete Seiten von Haus aus mit diesen Zahlen in graphisch günstigen Position versehen werden bzw. vorgewählt werden, so daß diese Zahlen angezeigt werden.

Bevorzugt wird die Anzeige dieser Zahlen im Web-Browser automatisch vorgewählt, wenn in der dem System bekannten Hardwarekonfiguration keine Mouse angeschlossen ist oder keine Tastatur vorhanden ist.

Vorteilhafte Ausgestaltungen der Erfindung werden weiter in den Zeichnungen erläutert. Hierbei zeigen:
Figur 1 zeigt ein Diagramm eines Ausführungsbeispiels der erfindungsgemäßen Kommunikationsschnittstelle;
Figur 2 zeigt ein stilisiertes Fernsehbild mit eingeblendeten Sub-Level-Domainnamen und
Figur 3 zeigt einen Ausschnitt aus einer stilisierten Homepage.

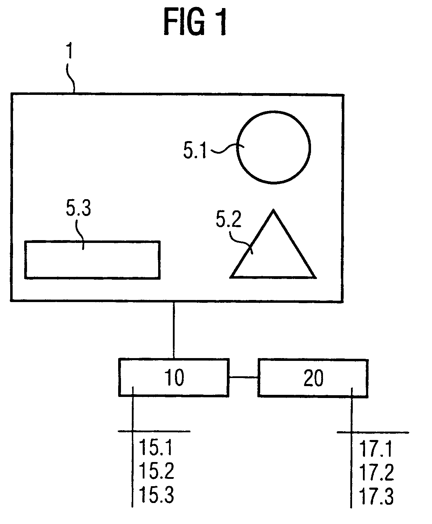

In **Figur 1** ist eine Ausführungsbeispiel einer erfindungsgemäßen Kommunikationsschnittstelle 1 mit graphisch orientierten Bereichen 5.1 bis 5.3 dargestellt. An der Kommunikations-schnittstelle 1 ist eine Analyseeinrichtung 10 zur Analyse der graphisch orientierten Bereiche 5.1 bis 5.3 bezüglich der in den graphischen Bereichen 5.1 bis 5.3 abgelegten Zeichenfolgen 15.1 bis 15.3 angeschlossen. Daneben ist eine Speichereinrichtung 20 vorgesehen, in der zu den Zeichenfolgen 15.1 bis 15.3 korrespondierende Adressen 17.1 bis 17.3 abgespeichert werden können.

Die graphischen Bereiche können Ikons, geometrische Formen, eingeblendete Text oder Bilder sein. Die Zeichenfolgen 15.1 bis 15.3 können HTML-Programmbefehle wie beispielsweise das Vorspringen auf eine neue Seite oder Zurückspringen zur alten Seite, URL's wie beispielsweise "http://www.siemens.de" oder eine e-mail-Adresse, wie beispielsweise info@siemens.de sein.

Die korrespondierenden Adressen 17.1 bis 17.3 können alphanumerische Zahlen, z.B. von 00 bis 99 oder andere Kurzbezeichnungen, wie beispielsweise "siemens", vollständige URL's oder e-mail-Adressen sein. Diese korrespondierenden Adressen 17.1 bis 17.3 dienen dem Benutzer zur leichteren Auswahl der durch die Analyseeinrichtung 10 erkannten Zeichenfolgen 15.1 bis 15.3. Diese korrespondierenden Adressen können in dem Speicher zwischengeschaltet werden, um entweder direkt aufgerufen zu werden oder als sogenanntes "Bookmark" bzw. "Lesezeichen" für einen späteren Abruf zur Verfügung zu stehen.

Im Betrieb werden auf einer Anzeigefläche der Kommunikations-schnittstelle 1 graphische Bereiche 5.1 bis 5.3 angezeigt. Die Analyseeinrichtung 10 analysiert das gesamte Bild und die einzelnen graphisch orientierten Bereiche auf etwa vorhandene Zeichenfolgen 15.1 bis 15.3. Diese Zeichenfolgen können beispielsweise als Buchstaben graphisch dargestellt sein und dann mit Hilfe der OCR-Technik als entsprechender Text erkannt werden. Es ist auch denkbar, daß hinter dem graphischen Bereich eine Funktion abgelegt ist, die durch die Analyseeinrichtung 10 als Navigationsfunktion oder versteckte URL-Adresse bzw. e-mail-Adresse erkannt wird. In einem solchen Fall ist für den Kommunikationsteilnehmer beispielsweise nur ein Logo oder ein Bild zu erkennen. Die eigentliche Information kann beispielsweise als Videotext im Hintergrund zur Verfügung gestellt sein.

Die erkannten Zeichenfolgen 15.1 bis 15.3 der graphischen Objekte 5.1 bis 5.3 werden dann an die Speichereinheit übergeben, die sie als korrespondierende Adresstouple 17.1 bis 17.3 zwischenspeichert. Hierbei ist es möglich, daß die Adresse 17 sowohl aus einer von Benutzer zu bestimmenden Kurzbezeichnung besteht, als auch der eigentlichen URL-Adresse beziehungsweise e-mail-Adresse. Es ist ebenfalls denkbar, daß die Adresse 17 nur aus der eigentlichen Adresse besteht, die der Benutzer dann aufrufen kann.

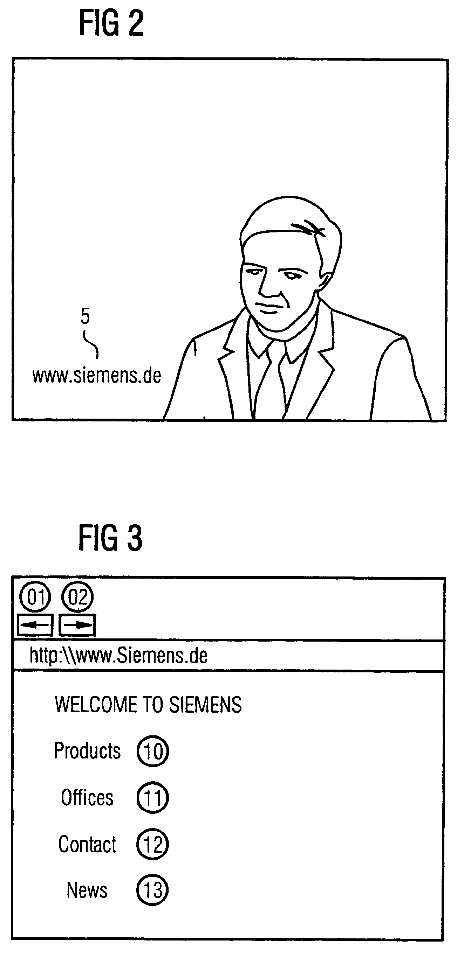

Auf diese Art und Weise ist es möglich, daß mit Hilfe der erfindungsgemäßen Kommunikationsschnittstelle 1 graphische Bereiche 5.1 bis 5.3 auf Zeichenfolgen 15.1 bis 15.3 analysiert werden können und auf diese Art und Weise das Merken oder Aufschreiben dieser Zeichenfolgen für den Benutzer entfällt. In **Figur 2** ist stilisiert ein Fernsehbild mit einer eingeblendeten Sub-level-Domain abgebildet. Die Sublevel-Domain "www.siemens.de" ist in diesem Fall der graphisch orientierte Bereich 5, der durch die Analyseeinrichtung 10 im Hintergrund auf etwaige Zeichenfolgen 15 hin analysiert wird. In diesem Fall wird die Zeichenfolge "www.siemens.de" als Sublevel-Domain und damit Teil einer URL erkannt. Diese Zeichenfolge 15 wird nun als korrespondierende Adresse 17 als "http://www.siemens.de" zwischengespeichert und steht so für den Benutzer zur Verfügung, um von ihm abgerufen zu werden.

In **Figur 3** ist in Fortführung der Figur 2 stilisiert ein Teil einer Homepage dargestellt. Die in Figur 2 bereits zwischengespeicherte URL wurde vom Benutzer aufgerufen und wird ihm nun auf der Anzeigefläche angezeigt. Mit Hilfe eines www-Browsers kann der Benutzer nun die korrespondierende Homepage zu der vorher im Fernsehbild eingespielten Sublevel-Domain betrachten. Hierbei sind auch zweistellige Zahlenblöcke mit eingeblendet, die es dem Benutzer erlauben, die den zu den zweistelligen Zahlenblöcken zugeordneten Funktionen abzurufen. Hierbei ist beispielsweise die Zahl "01" als Adresse 17 dem "back"-button zugeordnet, mit dem der Benutzer auf dieser zuvor aufgerufene Seite zurückspringen kann. Einer weiteren Navigationsfunktions, nämlich dem "forward"-button ist die Adresse "02" zugeordnet.

Darüberhinaus sind den Links, d.h. in diesem Fall den Namen der Homepageunterverzeichnisse, ebenfalls zweistellige Zahlen zugeordnet, so finden sich neben der Bezeichnung "product" die Nummer 10, etc. Die eigentliche Adresse der Seite ist als Link hinter dem Wort bzw. graphischen Bereich "product" verborgen. Genauso verhält es sich bei den graphischen Bereichen "offices contact" und "news".

Der Benutzer, der während des Fernsehens diese Homepage aufgerufen hat, ist nun in der Lage, durch Auswahl der einzelnen angezeigten Zahlen, die entsprechende zugeordnete Funktion aufzurufen. Gibt der Benutzer beispielsweise nun die Nummer 10, so wird er auf Seite vorspringen, auf der die Produkte zu sehen sind. Wählt der Benutzer stattdessen die Nummer 12, so landet er auf der Kontaktseite, wo er Telefonnummer, Adresse etc. einsehen kann bzw. eine eigene Nachricht verschicken kann. Auf diese Weise ist der Benutzer in der Lage, die angegebene Sub-Domain bzw. die damit verknüpfte Homepage anzusteuern, ohne das er sich diese merken müßte oder gar notieren müßte. Durch die Anzeige der Adressen 17 beispielsweise in Form von zweistelligen Zahlen ist er überdies in der Lage, den www-Browser mit der Fernbedienung zu benutzen.

Darüberhinaus ist es denkbar, daß die Adresse 17 auch über die Sprache angesteuert werden kann, wenn beispielsweise die Fernbedienung oder ein weiteres Eingabemedium über eine Spracherkennung verfügt. Dann wäre es bevorzugt auch denkbar, die einzelnen angezeigten Zeichenketten wie "products", "offices', etc. durch entsprechende Spracheingabe anzusteuern.

Auf diese Weise ist eine Kommunikationsschnittstelle bereitgestellt worden, die verlustfreieres Arbeiten zuläßt und für größere Kreise von potentiellen Benutzern einsetzbar ist. Dies wird insbesondere dadurch erreicht, daß eingeblendete Adressen direkt analysiert und erfasst werden und die Steuerrung über die Zehnertastatur einer gewöhnlichen Fernsehbedienung erfolgen kann.

In der vorliegenden Erfindung wurde eine Kommunikations-schnittstelle wie beispielsweise ein Fernseher, ein Web-Browser oder ein Scanner mit graphisch orientierten Bereichen wie beispielsweise Bilder, Frames, Hyperlinks und/oder Graphiken bereitgestellt, mit dem angezeigte URL's oder e-mail-Adressen direkt von einer Analyseeinrichtung erkannt werden und einer Speichereinrichtung zur Verfügung gestellt werden, so daß diese Adressen direkt für den Benutzer ansteuerbar sind, ohne das er sich die eingeblendete Adresse merken oder aufschreiben müßte.

## Patentansprüche

1. Kommunikationsschnittstelle (1) mit graphisch orientierten Bereichen (5)
**dadurch gekennzeichnet, daß**
eine Analyseeinrichtung (10) vorgesehen ist zur Analyse der graphisch orientierten Bereiche (5) auf spezielle Zeichenfolgen (15) und
eine Speichereinrichtung (20) vorgesehen ist zur Speicherung von zu den Zeichenfolgen (15) korrespondierenden Adressen (17).

2. Kommunikationsschnittstelle (1) nach einem der vorhergehenden Ansprüche
**dadurch gekennzeichnet, daß**
die Kommunikationsschnittstelle (1) ein Fernseher, ein Web-Browser oder ein Scanner ist.

3. Kommunikationsschnittstelle (1) nach einem der vorhergehenden Ansprüche
**dadurch gekennzeichnet, daß**
die Analyseeinrichtung (10) eine OCR-Analyseeinrichtung umfaßt.

4. Kommunikationsschnittstelle (1) nach einem der vorhergehenden Ansprüche
**dadurch gekennzeichnet, daß**
die graphisch orientierten Bereiche (15) Bilder, Frames, Hyperlinks und/ oder Graphiken umfassen.

5. Kommunikationsschnittstelle (1) nach einem der vorhergehenden Ansprüche
**dadurch gekennzeichnet, daß**
die speziellen Zeichenfolgen (15) HTML-Programmbefehle, URL's und/ oder e-mail-Adressen umfassen.

6. Kommunikationsschnittstelle (1) nach einem der vorhergehenden Ansprüche
**dadurch gekennzeichnet, daß**
die korrespondierenden Adressen (17) Zahlen und/ oder URL's und/ oder e-mail-Adressen umfassen.

7. Kommunikationsschnittstelle (1) nach einem der vorhergehenden Ansprüche
**dadurch gekennzeichnet, daß**
die korrespondierenden Adressen (17) dem graphisch orientierten Bereich zugeordnet werden, zu dem sie korrespondieren.

8. Kommunikationsschnittstelle (1) nach einem der vorhergehenden Ansprüche
**dadurch gekennzeichnet, daß**
sie durch eine Ferbedienung mit 10-er Block bedienbar ist.
